Europäisches Patentamt

European Patent Office

Office européen des brevets

(19)

(11) Numéro de publication: **0 105 033 B1**

# FASCICULE DE BREVET EUROPEEN

(45) Date de publication du fascicule du brevet:
13.11.85

(51) Int. Cl.⁴: **H 02 P 6/02,** G 05 D 13/62, G 05 D 3/14

(21) Numéro de dépôt: 83810409.9

(22) Date de dépôt: 12.09.83

(54) Dispositif pour la commande d'un moteur à courant continu.

(30) Priorité: 22.09.82 CH 5601/82

(43) Date de publication de la demande:
04.04.84 Bulletin 84/14

(45) Mention de la délivrance du brevet:
13.11.85 Bulletin 85/46

(84) Etats contractants désignés:
DE FR GB SE

(56) Documents cités:
FR - A - 2 443 761
GB - A - 2 064 897
US - A - 4 290 000
US - A - 4 346 334

(73) Titulaire: Gillièron, Claude, Chemin du Risoux 2,
CH-1110 Morges (CH)

(72) Inventeur: Gillièron, Claude, Chemin du Risoux 2,
CH-1110 Morges (CH)

(74) Mandataire: Steiner, Martin et al, c/o AMMANN
INGENIEURS-CONSEILS EN PROPRIETE
INTELLECTUELLE SA BERNE Schwarztorstrasse 31,
CH-3001 Bern (CH)

**0 105 033**

## Description

La présente invention concerne und dispositif pour la commande d'un moteur à courant continu comprenant un capteur délivrant au moins un signal représentatif de l'angle de rotation du rotor dudit moteur, ledit signal mesurant la position angulaire réelle dudit rotor, un générateur de signal de consigne délivrant un signal définissant une position angulaire de consigne dudit rotor et des moyens délivrant à partir desdits signaux de position réelle et de consigne, un signal d'erreur représentatif de l'écart angulaire entre la position réelle du rotor et la position de consigne, ledit dispositif commandant un déplacement dudit rotor cherchant à annuler ledit signal d'erreur.

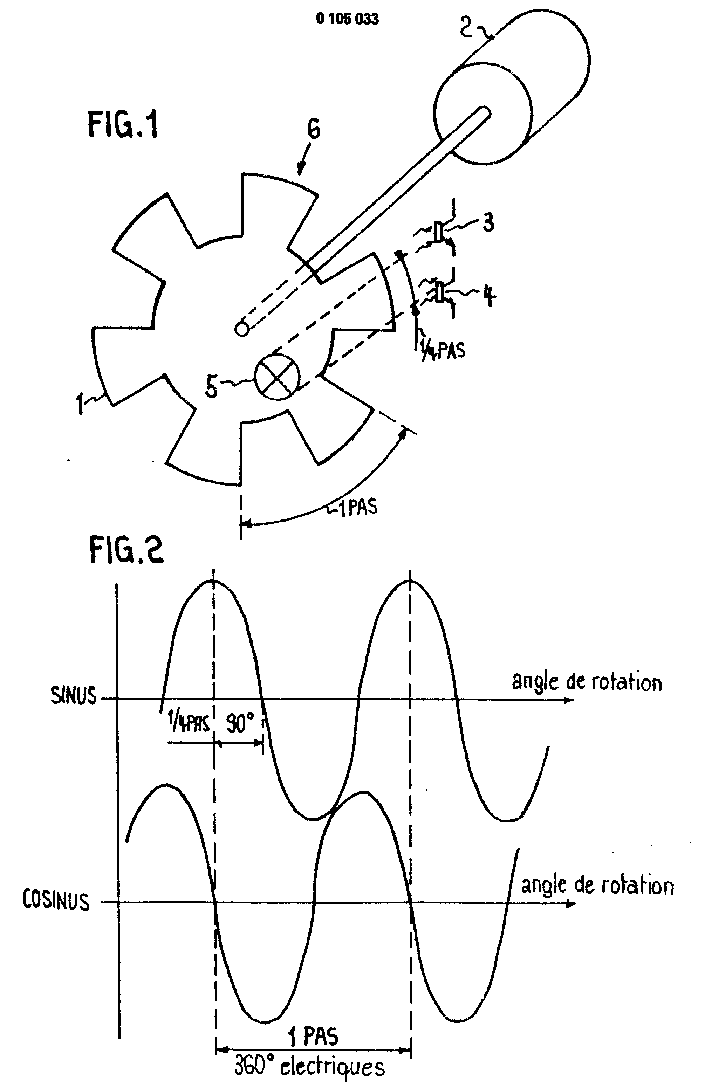

La réalisation d'un dispositif comprenant un motor à courant continu couplé à un capteur incrémental est connue. Le capteur délivre deux signaux déphasés fonction de l'angle de rotation. La figure 1 montre le principe d'un tel capteur 6. Une roue codeuse 1 est montée sur l'arbre du moteur 2 et deux capteurs photoélectriques 3 et 4 décalés de $^1/_4$ d'un pas de la roue codeuse 1 reçoivent la lumière d'une source lumineuse 5 à travers cette roue codeuse. Les signaux sinusoidaux sinus et cosinus, fonction de l'angle de rotation, sont illustrés en figure 2 qui montre que la rotation d'un pas du capteur correspond à 360° électriques.

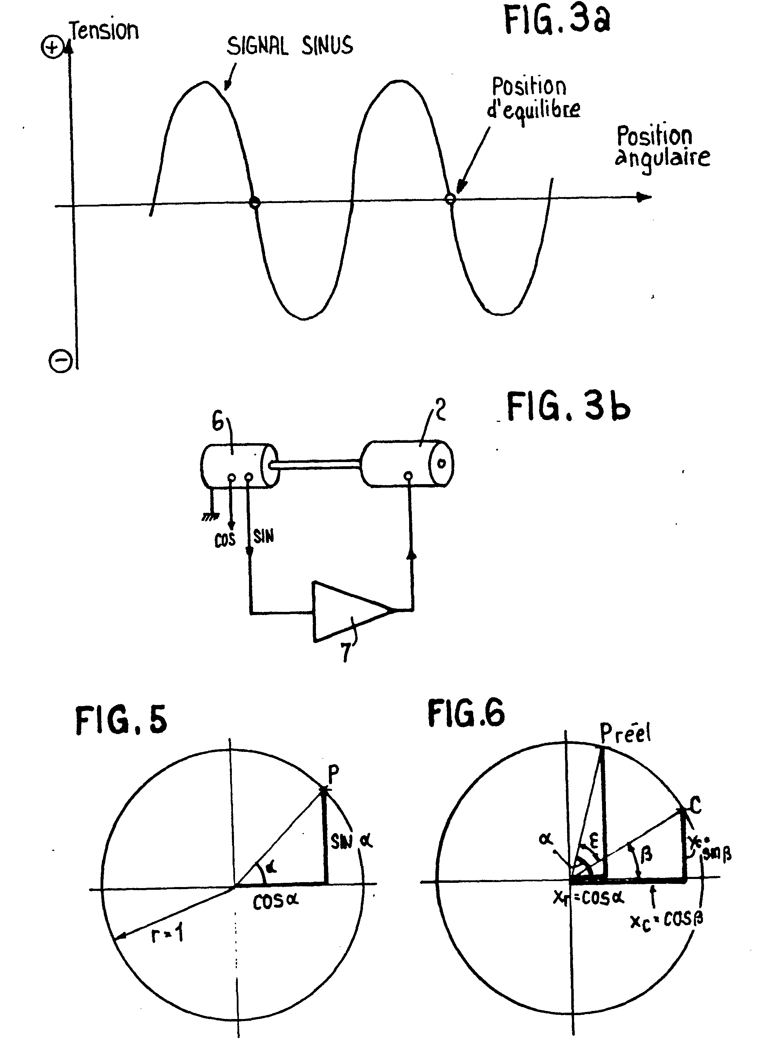

L'asservissement en vitesse du moteur est généralement obtenu par comparaison de la fréquence du signal délivré par une des voies du capteur incrémental avec une fréquence de référence. L'asservissement en position est basé sur le comptage/décomptage des impulsions provenant du capteur, associé à une discrimination du sens de rotation réalisée à partir des signaux sinus et cosinus déphasés de 90°. Le maintien du moteur à la position désirée peut se faire en utilisant par exemple le signal »sinus« (fig. 3a) du capteur incrémental en tant que signal d'erreur de position, l'asservissement (fig. 3b) maintenant le moteur sur la position correspondant à la valeur nulle de la sinusoide.

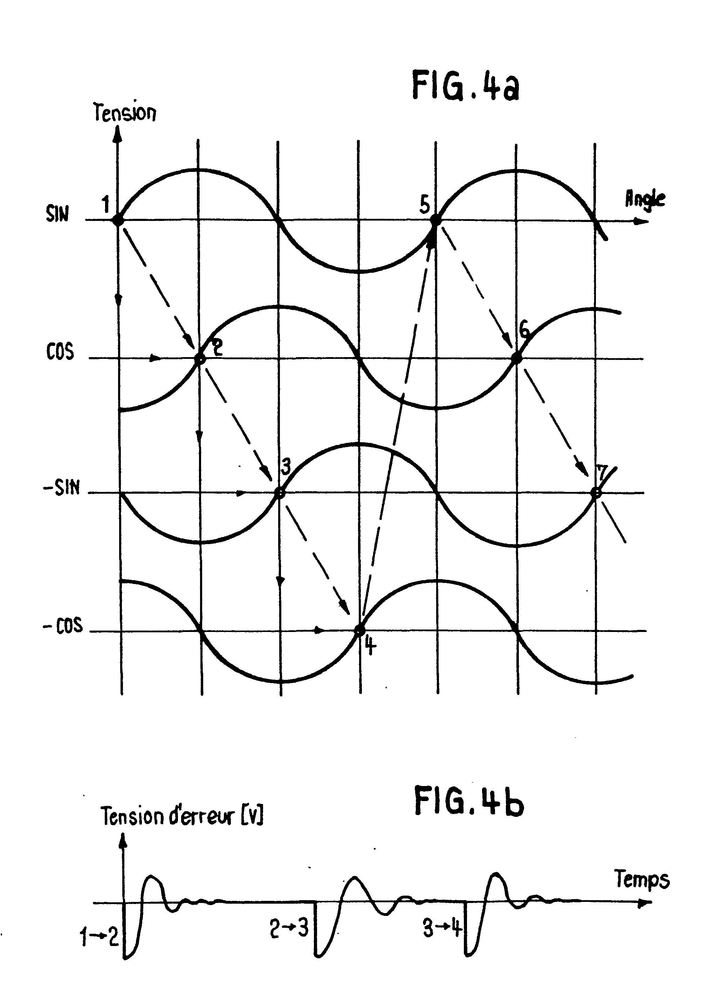

Un changement de la position de consigne peut être réalisé par exemple à l'aide de la méthode connue dite »d'avance par quart de pas« dont le principe est le suivant. Le capteur incrémental délivre les signaux sinus et cosinus de l'angle de rotation. Leur inversion permet d'obtenir quatre signaux sinusoidaux déphasés de 90°: sinus, cosinus, — sinus et — cosinus (fig. 4a). A l'aide d'un commutateur électronique sélectionnant successivement ces signaux, une avance par sauts de 90° électriques est possible, pour autant que cette commutation se fasse à une vitesse tenant compte des constantes de temps mécaniques du système. La commutation permet donc de modifier par sauts brusques la tension de consigne de l'asservissement, ce qui présente l'inconvénient de faire travailler le moteur à courant continu selon un régime proche de celui d'un moteur pas à pas, suivant la séquence classique: arrêt — accélération — ralentissement — arrêt. Comme indiqué en figure 4b, la commutation brusque d'un signal d'erreur nul à un signal d'erreur maximum engendre des oscillations plus ou moins bien amorties et introduit un risque d'instabilité dans le servo-mécanisme.

On connaît par le brevet GB 2 040 467 une commande de position dans laquelle un capteur délivre un signal sinusoidal dont la phase est représentative de la position angulaire du rotor. Un générateur délivre un signal rectangulaire de consigne dont la phase est représentative de la valeur de consigne. Un circuit calcule un signal d'erreur comme valeur moyenne d'un signal représentatif de la différence entre le signal de position et le signal de consigne. Toutefois, le signal d'erreur déterminé comme valeur moyenne de la différence entre un signal sinusoidal et un signal rectangulaire ne permet pas un positionnement très précis.

Le but du dispositif selon l'invention est de réaliser un changement progressif de la valeur de consigne afin d'obtenir une commande très précise et sans à-coups de la position et/ou de la vitesse du moteur.

Ce but est atteint grâce au dispositif suivant la revendication 1.

L'invention va être décrite ci-après, à titre d'exemple et à l'aide du dessin dans lequel

— la figure 1 montre le principe d'un capteur incrémental,
— la figure 2 montre les signaux délivrés par le capteur de la figure 1,
— la figure 3a montre un signal du capteur utilisé pour positionner le rotor d'un moteur à courant continu,
— la figure 3b montre un circuit d'asservissement de position utilisant le signal de la figure 3a,
— la figure 4a montre les signaux d'une commande de position dite »d'avance par quart de pas«,
— la figure 4b montre la tension d'erreur d'un servo-mécanisme dans le cas de l'avance par quart de pas,
— la figure 5 montre que la position angulaire d'un point P est définie par les fonctions sinus et cosinus de l'angle du rayon passant par P par rapport à une référence,
— la figure 6 montre une position de consigne C définie par le sinus et le cosinus de l'angle de consigne, et une position réelle P définie de la même manière,
— la figure 7 montre le principe pour l'obtention d'un signal d'erreur à partir des grandeurs de position réelle et de consigne,
— la figure 8 montre les grandeurs de position réelle et de consigne et l'angle d'erreur,
— la figure 9 montre le principe du dispositif selon l'invention,
— la figure 10 est un schéma bloc d'une commande incrémentale selon l'invention,

2

0 105 033

— la figure 11 montre le schéma du calculateur d'écart des figures 9 et 10, et
— la figure 12 est un schéma bloc du dispositif selon l'invention fonctionnant en interpolateur.

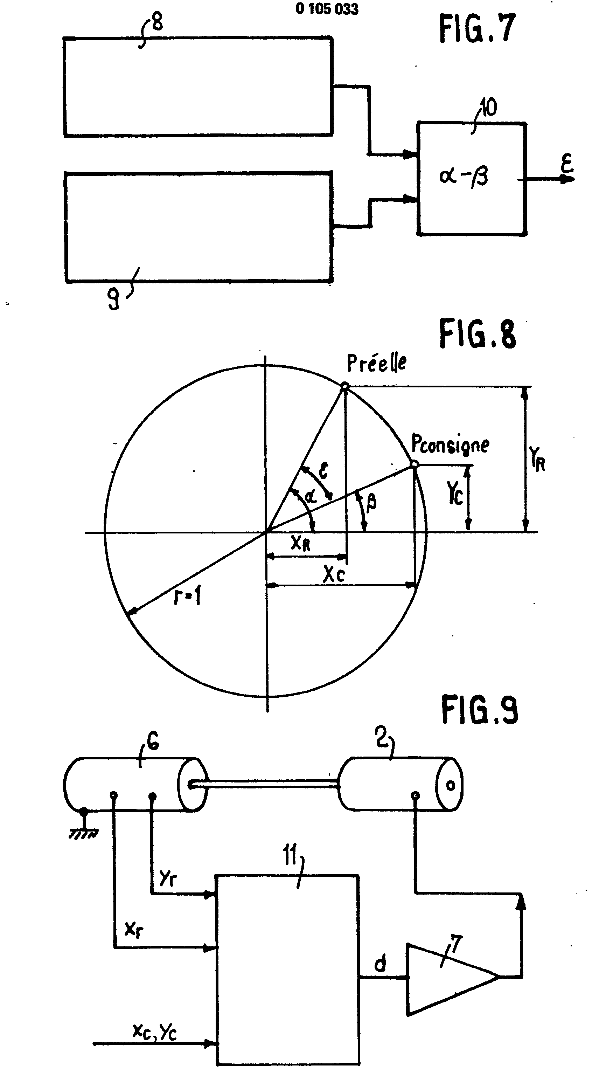

La figure 5 montre un point P du rotor du moteur de la figure 3b se déplaçant dans un plan, selon un cercle. La position de P est en chaque instant déterminée par les valeurs instantanées des fonctions $\sin \alpha$ et $\cos \alpha$ de l'angle $\alpha$ du rayon passant par P par rapport à une référence. En appliquant les signaux $\sin \alpha$ et $\cos \alpha$ sur les entrées de déflection X et Y d'un oscilloscope, le spot ou point P décrit une trajectoire circulaire sur l'écran de ce dernier, ce qui montre bien que les signaux $\sin \alpha$ et $\cos \alpha$ permettent de déterminer entièrement la position du point P le long de sa trajectoire circulaire. L'angle $\alpha$ est l'angle électrique du système de mesure et, à la constante de transmission près, la position du mécanisme commandé par le moteur. Les grandeurs $\sin \alpha$ et $\cos \alpha$ sont délivrées par le capteur 6 de la figure 1 utilisé dans la présente invention et mesurant la position angulaire du rotor du moteur.

La figure 6 montre qu'il est possible de prévoir une position de consigne C à partir des coordonnées $\sin \beta$ et $\cos \beta$ calculées séparément. L'angle $\varepsilon = \alpha - \beta$ est l'angle d'erreur, c'est-à-dire la différence entre les positions angulaires, réelles et de consigne. Un signal d'erreur fonction de l'angle $\varepsilon$, est utilisé pour asservir la position angulaire du rotor avec la position de consigne.

Il est possible de concevoir un circuit, où le signal d'erreur $\varepsilon$ est obtenu par un circuit tel que celui de la figure 7 dans lequel un circuit 8 délivre un signal proportionnel à l'angle de consigne $\beta$ à un circuit 10 recevant un second signal proportionnel à la position angulaire réelle $\alpha$ obtenu par un circuit 9 à partir des signaux $\sin \alpha$ et $\cos \alpha$ du capteur 6. Le circuit 10 fait la différence des signaux des circuits 8 et 9 et délivre le signal d'erreur $\varepsilon$ permettant d'asservir la position réelle du rotor à la position de consigne. Cependant, le calcul du signal proportionnel à l'angle $\alpha$ n'est pas simple. En effet, les signaux $\sin \alpha$ et $\cos \alpha$ fournis par le capteur 6 ne satisfont pas exactement la relation $\sin^2 \alpha + \cos^2 \alpha = $ constante. Ceci est dû aux imprécisions mécaniques, optiques et électroniques du capteur. Ces imprécisions ont pour conséquence que le cercle généré sur l'écran de l'oscilloscope n'est pas parfait; il ressemble plutôt à une ellipse bosselée dont les axes de symétrie ne sont pas rectilignes avec le système de coordonnées. Le calcul du signal proportionnel à l'angle $\alpha$ nécessite de normaliser les signaux sinus et cosinus délivrés par le capteur 6 et d'utiliser les fonctions trigonométriques inverses arc sin et arc cos.

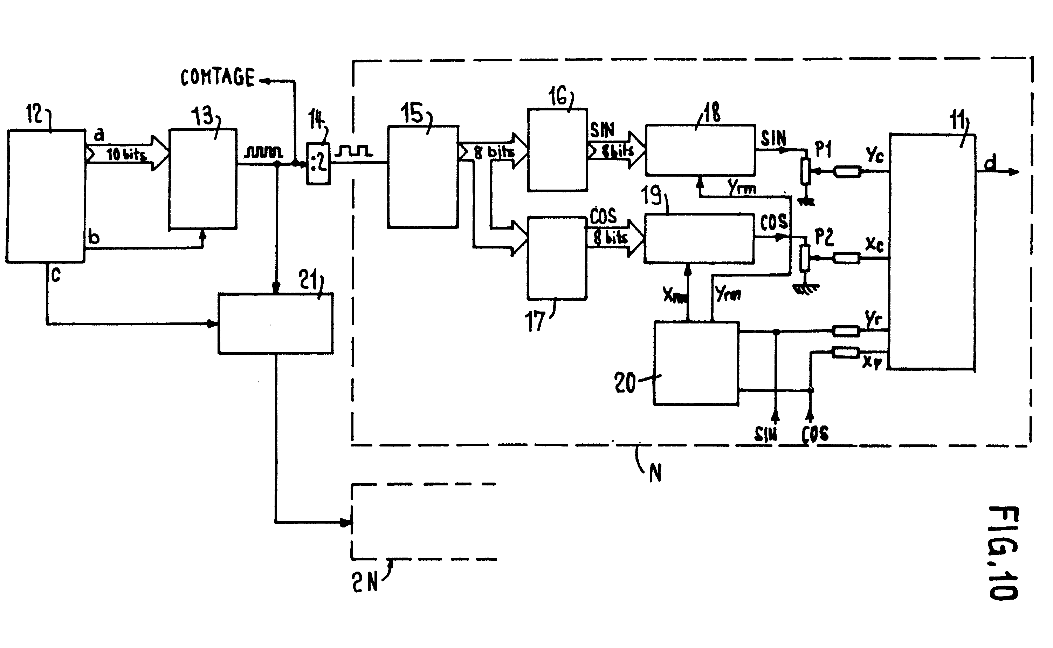

Pour les raisons indiquées ci-dessus, le dispositif selon la présente invention ne cherche pas à calculer explicitement l'angle $\alpha$ mais il utilise directement les coordonnées indiquées en figure 8 des angles de position réelle $\alpha$ et de consigne $\beta$ sous la forme des signaux proportionels au sinus et au cosinus de ces angles. Ces signaux, respectivement ces coordonnées sont les suivants:

| angle de consigne $\beta$: | $X_c = \cos \beta$ | $Y_c = \sin \beta$ |
| angle de position réelle $\alpha$: | $X_r = \cos \alpha$ | $Y_r = \sin \alpha$ |

L'écart d entre la position réelle et la position de consigne est alors calculé selon la relation:

$$d = (Y_c - Y_r) \times (X_c + X_r)/2 - (X_c - X_r) \times (Y_c + Y_r)/2 = \sin \varepsilon \qquad (1)$$

La relation 1 montre que l'écart d ne dépend que de l'angle d'écart $\varepsilon$. Il est indépendant de la position angulaire réelle $\alpha$.

La figure 9 montre le principe du dispositif selon l'invention avec le capteur 6 délivrant les signaux de position réelle $X_r$ et $Y_r$ à un calculateur 11 recevant les signaux de consigne $X_c$ et $Y_c$ et délivrant le signal d calculé par la relation (1) ci-dessus à l'entrée d'un amplificateur de puissance 7 commandant le moteur 2. Le circuit de la figure 9 est en boucle fermée et il asservit la position réelle du rotor du moteur 2 à la position de consigne.

La figure 10 montre le schéma bloc du dispositif selon l'invention dans lequel la position réelle du rotor est asservie avec la valeur de consigne, cette dernière étant susceptible de varier dans le temps, ce qui asservit la vitesse du rotor à cette position de consigne variable. Le dispositif comprend un microprocesseur 12 délivrant en a un signal de fréquence de consigne commandant la fréquence d'une horloge 13 à fréquence contrôlée. Le taux de variation de la fréquence est contrôlé par l'horloge elle-même. Le microprocesseur délivre encore en b un signal de marche/arrêt à l'horloge 13 et en c un signal de commande d'un circuit 21 dit de correction locale. Dans l'exemple de la figure 10, les circuits 11, 12, 13 et 21 mentionnés ci-dessus contrôlent les mouvements de rotation de deux systèmes dans le rapport de 1 à 2. En conséquence, la figure 10 montre deux circuits »N« et »2N« de construction similaire, asservissant respectivement les moteurs de chaque système dans un rapport de vitesse 1 à 2. Pour cette raison, le circuit »N« est commandé par un signal délivré par le diviseur par deux 14, alors que le système »2N« est commandé en principe directement par la fréquence double de sortie de l'horloge 13. Par la suite, seul le circuit »N« sera décrit, sachant que le circuit »2N« fonctionne de manière identique. Le circuit »N« comprend un compteur 15 de 8 bits, d'une capacité de 256, recevant le signal de sortie du diviseur 14. Les sorties des étages binaires du compteur 15 sont utilisées comme adresses d'une mémoire ROM 16 contenant la fonction sinus et d'une mémoire ROM 17 contenant la fonction cosinus.

Cette capacité de 256 correspond à une résolution de $^1/_{256}$ de pas, c'est-à-dire que 256 impulsions

3

délivrées au compteur 15 correspondent à une rotation du rotor égale à 1 pas du capteur ou 360° électriques. A la sortie des mémoires 16 et 17 la résolution angulaire est donc de 360°/256 = 1,5° et la résolution d'amplitude est plus petite que 1% de la valeur maximum. Les valeurs digitalisées sur 8 bits à la sortie des mémoires 16 et 17 sont les valeurs digitalisées de consigne qui sont transformées en signaux analogiques de consigne $Y_c = \sin \beta$ et $X_c = \cos \beta$ respectivement par les convertisseurs digitaux analogiques 18 et 19. Ces derniers délivrent les signaux de consigne analogiques $X_c$, $Y_c$ respectivement par deux potentiomètres P1 et P2 au circuit de calcul 11 décrit plus loin. Celui-ci reçoit aussi les signaux de position réelle Xr, Yr, délivrés par le capteur 6 et calcule l'écart d entre la position réelle du rotor et la position de consigne.

Il a déjà été vu plus haut que le circuit »2N« est commandé par un signal de fréquence double de celle du signal commandant le circuit »N«. Le circuit »2N« est commandé par ce signal de fréquence double à travers le circuit 21 de correction locale commandé par la sortie c du microprocesseur. Le circuit 21 ajoute ou inhibe des impulsions de l'horloge 13 en fonction d'erreurs locales du système, afin de corriger ces erreurs dues au fait qu'en pratique, la relation entre les nombres de tour N et 2N n'est pas exactement 1/2. Dans ce cas, il est possible de déterminer par mesure les écarts par rapport à la valeur idéale et de programmer une mémoire ROM du microprocesseur à l'aide de valeurs fonctions de ces écarts et destinées à commander le circuit 21 pour modifier le nombre d'impulsions par unité d'angle à la sortie de ce circuit 21 de manière à annuler les écarts et à assurer que le rapport N/2N es bien exactement 1/2 pour n'importe quel angle de rotation. Le circuit »N« de la figure 10 comprend en outre un circuit 20 de calcul et de mémorisation de la valeur moyenne du signal de position réelle recevant des signaux Xr et Yr du capteur 6 et délivrant respectivement aux convertisseurs analogiques 18 et 19 les signaux Yrm et Xrm représentatifs des valeurs moyennes de ces signaux. Les signaux Xrm et Yrm déterminent le gain des convertisseurs 18 et 19 de sorte que le signal de consigne est adapté au signal de position réelle du rotor. Ceci permet de compenser les influences des effets parasites aléatoires tels que dérives, vieillissement, etc. sur le signal de position réelle en adaptant ou corrigeant l'amplitude du signal de consigne à l'amplitude du signal de position.

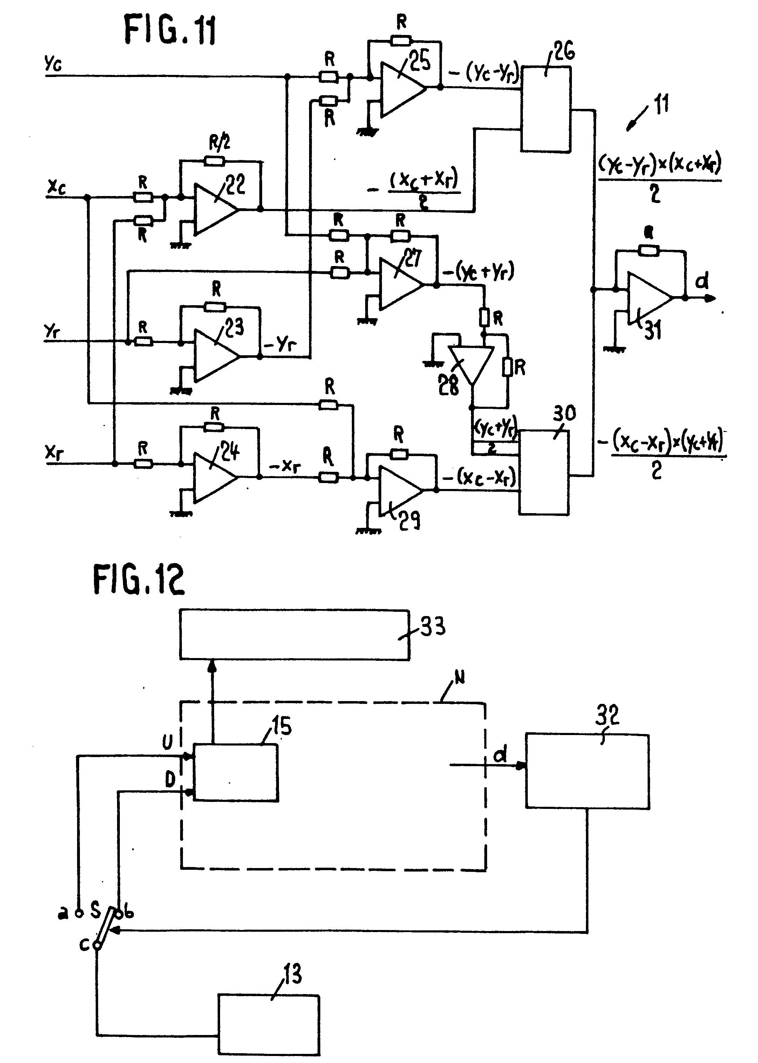

- La figure 11 est un schéma-bloc du calculateur 11 de la figure 10, calculant par voie analogique l'écart d selon la relation (1). Les quatres entrées sont les signaux de consigne $X_c$ et $Y_c$ et les signaux de position réelle Xr et Yr. L'amplificateur opérationnel 22 réalise l'opération $-(Xr + Xc)/2$. Les amplificateurs opérationnels 23 et 24 fonctionnent tous deux en inverseurs et délivrent respectivement les signaux $-Yr$ et $-Xr$. L'amplificateur opérationnel 25 produit le signal $-(Yc - Yr)$. Le multiplicateur 26 réalise le premier terme de la relation (1). L'amplificateur opérationnel 27 délivre le signal $-(Yc + Yr)$ et l'amplificateur opérationnel 28 le signal $(Yc + Yr)/2$. L'amplificateur opérationnel 29 réalise le signal $-[Xc - Xr]$ et le multiplicateur 30 produit le second terme de la relation (1). L'amplificateur opérationnel 31 délivre alors le signal d'erreur d du dispositif. On sait que le dispositif est tel qu'il tend à annuler ce signal afin d'asservir la position réelle du rotor à la position de consigne. Il est clair que le signal d'erreur d pourrait aussi être calculé de manière connue par voie digitale. Dans ce cas, des convertisseurs 18 et 19 de la figure 10 seraient supprimés et les circuits analogiques décrits plus haut seraient remplacés par un système digital adéquat comprenant notamment deux convertisseurs analogiques-digitaux pour traiter les signaux $X_r$ et $Y_r$. On a déjà vu plus haut que le dispositif selon l'invention permet un asservissement de vitesse du moteur en produisant à l'aide du microprocesseur une fréquence déterminée de l'horloge, produisant elle-même une variation sinusoidale dans le temps des signaux de consigne Xc et Yc avec une période constante. La comparaison de la fréquence de sortie de l'horloge 13 avec une fréquence de référence produit un signal d'erreur de vitesse qui, par l'intermédiaire du microprocesseur, vient asservir la fréquence de l'horloge et en conséquence la vitesse du moteur avec une très haute précision. Au démarrage, l'accélération du moteur est déterminée par le taux de variation de la fréquence contrôlé par l'horloge elle-même. Il résulte de ce qui précède que le dispositif selon l'invention permet de réaliser les fonctions suivantes, en plus de sa possibilité de réaliser des déplacement sans à-coups:

— Déplacements rigoureusement contrôlés en vitesse
— Déplacement avec accélération contrôlée
— Déplacement avec contrôle permanent de la position et de la vitesse instantanée
— Synchronisation absolue de plusieurs mouvements avec des rapports de vitesse différents (engrenage électrique)
— Correction de défauts ou imprécisions locales
— Déplacement à ultra-basse vitesse.

La figure 12 montre que le dispositif selon l'invention peut être utilisé dans un système de mesure comme interpolateur linéaire à l'intérieur d'un pas du capteur. La figure montre le circuit N de la figure 10 avec l'oscillateur 13 et le compteur 15 d'une capacité de 256, qui dans ce cas est un compteur réversible. Le signal d'erreur à la sortie du circuit de calcul 11 (non représenté en fig. 12) n'est pas utilisé pour positionner le rotor d'un moteur mais sa polarité est déterminée par un comparateur de polarité 32 qui commande un commutateur S entre les positions c-a et c-b, permettant, comme indiqué schématiquement, d'alimenter le compteur 15 par le signal de l'oscillateur en marche avant ou en marche arrière. Le fonctionnement est le suivant. Le rotor du moteur est écarté par une action extérieure d'un angle électrique déterminé à l'intérieur d'un pas du capteur, par rapport à la position de consigne, de sorte qu'il existe un signal d'erreur d, différent de zéro qui mesure l'angle électrique en question. Le comparateur détermine la polarité du signal d'erreur et commande le commutateur S de manière que le contenu du compteur soit augmenté ou diminué jusqu'à ce que le signal d'erreur s'annule. A ce moment, le contenu du compteur 15 est une mesure, par exemple indiquée par un élément d'affichage 33, de la grandeur de l'angle électrique à mesurer. A partir du moment où le signal d'erreur s'annule, le commutateur S délivre alternativement une impulsion d'incrémentation et une impulsion de décrémentation au compteur 15 dont le contenu varie donc périodiquement d'une unité représentée par une variation correspondante du bit le moins significatif. En ne prenant pas ce dernier bit (tolérance) en considération, les autres bits indiquent le résultat de la mesure ou interpolation linéaire à l'intérieur d'un pas du capteur (360° électriques) d'un angle produit extérieurement entre la position réelle du rotor et la position de consigne. Il est cependant évident que la mesure peut aussi être faite avec une tolérance plus grande que 1 bit.

En résumé, le dispositif selon l'invention fonctionne non seulement en servo-mécanisme mais encore comme interpolateur d'un système de mesure en boucle ouverte ou fermée.

## Revendications

1. Dispositif pour la commande d'au moins un moteur à courant continu (2) comprenant un capteur (6) délivrant des signaux représentatifs de l'angle de rotation du rotor dudit moteur, ces signaux mesurant la position angulaire réelle ($\alpha$) dudit rotor, un générateur de signaux de consigne (15—19) délivrant des signaux déffinissant une position angulaire de consigne ($\beta$) dudit rotor, lesdits signaux de position réelle (Xr, Yr) et lesdits signaux de position de consigne (Xc, Yc) étant formés chacun de deux signaux déphasés entre eux d'un angle déterminé, chacun desdits signaux déphasés étant une fonction sinusoidale de l'angle ($\alpha$) de position réelle du rotor, respectivement de l'angle ($\beta$) de position de consigne, et des moyens (11) délivrant à partir desdits signaux de position réelle et de consigne un signal d'erreur (d) représentatif de l'écart angulaire ($\varepsilon$) entre la position réelle du rotor et la position de consigne, ledit dispositif commandant un déplacement dudit rotor cherchant à annuler ledit signal d'erreur (d), caractérisé par le fait que ledit générateur de signaux de consigne comprend des moyens d'adresses (15) produisant des signaux d'adresses pour deux mémoires (16, 17) de valeurs de consigne qui délivrent lesdits signaux de consigne (Xc, Yc) en réponse auxdits signaux d'adresses, lesdits moyens (11) recevant lesdits signaux déphasés entre eux et délivrant ledit signal d'erreur (d) fonction dudit écart angulaire ($\varepsilon$).

2. Dispositif selon la revendication 1, caractérisé par le fait que lesdits moyens sont un calculateur (11) déterminant ledit signal d'erreur (d) par la relation:

$$d = (Y_c - Y_r) \times (X_c + X_r)/2 - (X_c - X_r) \times (Y_c + Y_r)/2 = \sin \varepsilon \tag{1}$$

avec:

$X_c = \cos \beta, Y_c = \sin \beta, \beta =$ angle de consigne
$X_r = \cos \alpha, Y_r = \sin \alpha, \alpha =$ angle de position réelle
$\varepsilon = \alpha - \beta =$ écart angulaire.

3. Dispositif selon les revendications 1 ou 2, caractérisé en ce que lesdits moyens d'adresses sont un compteur (15) recevant un signal d'horloge.

4. Dispositif selon la revendication 2, caractérisé par le fait que lesdit calculateur (11) reçoit comme grandeurs d'entrée lesdits signaux de position réelle (Xr, Yr) et de consigne (Xc, Yc) et qu'il calcule de manière en soi connue, par voie digitale ou analogique, le signal d'erreur (d).

5. Dispositif selon la revendication 3, comprenant des moyens de conversion digitale-analogique (18, 19) desdits signaux de consigne et un circuit (20) adaptant l'amplitude desdits signaux de consigne (Xc, Yc) à la sortie desdits moyens de conversion auxdits signaux de position réelle (Xr, Yr) pour compenser des variations aléatoires de l'amplitude desdits signaux de position.

6. Dispositif selon la revendication 3, caractérisé par le fait que ledit signal d'horloge est délivré par une horloge (13) dont la fréquence est contrôlée par un microprocesseur (12).

7. Dispositif selon la revendication 6, pour la commande de deux moteurs dans un rapport de vitesses déterminé, caractérisé par le fait qu'il comporte deux circuits d'erreur de position comprenant chacun un générateur de signaux de consigne (15—19) et un calculateur (11) délivrant le signal d'erreur de position (d), lesdits circuits recevant de ladite horloge (13) des signaux dont les fréquences sont dans un rapport déterminé, identique au rapport desdites vitesses, et par le fait qu'il comprend un circuit de correction (21) connecté à ladite horloge (13) et à l'un des circuits d'erreur de position et commandé par ledit microprocesseur (12) pour ajouter ou inhiber des impulsions d'horloge à l'entrée dudit circuit d'erreur de position dans le but de corriger des écarts dudit rapport de vitesse par rapport à la valeur théorique.

8. Dispositif selon la revendication 7, caractérisé par le fait que les grandeurs de correction desdits écarts du rapport des vitesses sont mémorisées dans une mémoire du microprocesseur (12).

9. Dispositif selon la revendication 1, caractérisé par le fait que ledit capteur (6) est du type incrémental, rotatif ou linéaire ou encore du type à franges d'interférences.

10. Utilisation du dispositif selon la revendication 3 comme interpolateur d'un système de mesure fonctionnant en boucle ouverte ou fermée, caractérisée par le fait que ledit compteur (15) est de type bidirectionnel, ledit dispositif comportant des moyens (32) de discrimination de polarité dudit signal d'erreur (d) représentatif de l'écart angulaire entre une position réelle du rotor imposée de l'extérieur et une position de consigne, lesdits moyens (32) commandant l'incrémentation ou la décrémentation dudit compteur (15) de manière à annuler ledit signal d'erreur, de sorte que le contenu dudit compteur est une mesure dudit écart angulaire.

## Patentansprüche

1. Regeleinrichtung für mindestens einen Gleichstrommotor (2), welche einen Geber (66), der Signale liefert, die den Drehungswinkel des Rotors des Motors darstellen, welche Signale die effektive Winkelstellung ($\alpha$) des Rotors messen, einen Sollwert-Signalgenerator (15—19), welcher Signale liefert, die eine Sollwertwinkelstellung ($\beta$) des Rotors definieren, wobei jedes der Effektivwertstellung-Signale (Xr, Yr) und der Sollwertstellungs-Signale (Xc, Yc) zwei gegenseitige, um einen bestimmten Winkel phasenverschobene Signale aufweist, wobei jedes der phasenverschobenen Signale eine Sinusfunktion der effektiven Winkelstellung ($\alpha$) bzw. der Sollwertwinkelstellung ($\beta$) des Rotors darstellt und Mittel (11), welche aus den Effektivwert- und Sollwertstellungs-Signalen ein Fehlersignal (d) liefern, welches die Winkelabweichung ($\varepsilon$) zwischen der effektiven Stellung und der Sollwertstellung des Rotors darstellt, aufweist, wobei die Regeleinrichtung eine Verstellung des Rotors steuert, die das Fehlersignal zu annulieren versucht, dadurch gekennzeichnet, daß der Sollwert-Signalgenerator Adressenmittel (15) aufweist, die Adressensignale für zwei Sollwertspeicher (16, 17) erzeugen, die die Sollwertsignale (Xc, Yc) als Antwort auf die Adressensignale liefern, und daß die erwähnten Mittel (11) die gegenseitigen phasenverschobenen Signale empfangen und das Fehlersignal (d) liefern, welches von der Winkelabweichung ($\varepsilon$) abhängig ist.

2. Regeleinrichtung nach Anspruch 1, dadurch gekennzeichnet, daß die genannten Mittel ein Rechner (11) sind, welcher das Fehlersignal (d) durch die Relation bestimmt:

$$d = (Yc-Yr) \times (Xc+Xr)/2 - (Xc-Xr) \times (Yc+Yr)/2 = \sin \varepsilon$$

mit

$Xc = \cos \beta$, $Yc = \sin \beta$, $\beta =$ Sollwertwinkelstellung
$Xr = \cos \alpha$, $Yr = \sin \alpha$, $\alpha =$ Effektive Winkelstellung
$\varepsilon = \alpha - \beta =$ Winkelabweichung

3. Regeleinrichtung nach Anspruch 1 oder 2, dadurch gekennzeichnet, daß die Adressenmittel ein Zähler (15) sind, welcher ein Taktsignal empfängt.

4. Regeleinrichtung nach Anspruch 2, dadurch gekennzeichnet, daß der Rechner (11) als Eingangsgrößen die Effektivwertstellungs-Signal (Xr, Yr) und die Sollwertstellungs-Signale (Xc, Yc) empfängt, und daß er das Fehlersignal (d) in bekannter, analoger oder digitaler Weise rechnet.

5. Regeleinrichtung nach Anspruch 3, welche Analog-Digital-Wandlermittel (18, 19) für die Sollwertsignale und eine Schaltung (20), welche die Amplitude der Sollwertsignale (Xc, Yc) am Ausgang der Wandlermittel an die Effektivwertstellungs-Signale (Xr, Yr) anpaßt, um Zufallsänderungen der Amplitude der Effektivwertstellungs-Signale zu kompensieren, aufweist.

6. Regeleinrichtung nach Anspruch 3, dadurch gekennzeichnet, daß das Taktsignal durch einen Taktgeber (13) geliefert wird, dessen Frequenz durch einen Mikroprozessor (12) gesteuert wird.

7. Regeleinrichtung nach Anspruch 6 für die Steuerung von zwei Motoren in einem bestimmten Geschwindigkeitsverhältnis, dadurch gekennzeichnet, daß sie zwei Stellungsfehlerschaltungen aufweist, wobei jede Stellungsfehlerschaltung einen Sollwertsignal-Generator (15—19) und einen Rechner (11) aufweist, welcher ein Stellungsfehlersignal (d) liefert, wobei die genannten Schaltungen Signale des Taktgebers (13), deren Frequenzen in einem bestimmten Verhältnis stehen, das dem Geschwindigkeitsverhältnis identisch ist, empfangen, und daß sie eine Korrekturschaltung (21), welche mit dem Taktgeber (13) und mit einer der Stellungsfehlerschaltungen verbunden ist, aufweist, wobei die Korrekturschaltung durch den Mikroprozessor (12) gesteuert wird, um Taktimpulse am Eingang der Stellungsfehlerschaltung zu addieren oder zu unterdrücken, um Abweichungen des Geschwindigkeitsverhältnisses bezüglich des theoretischen Wertes zu korrigieren.

8. Regeleinrichtung nach Anspruch 7, dadurch gekennzeichnet, daß die Korrekturgrößen der Abweichungen des Geschwindigkeitsverhältnisses in einem Speicher des Mikroprozessors (12) gespeichert sind.

9. Regeleinrichtung nach Anspruch 1, dadurch gekennzeichnet, daß der Geber (6) vom rotierenden oder linearen Inkremental- oder Interferenzstreifentyp ist.

10. Verwendung der Regeleinrichtung nach Anspruch 3 als Interpolator in einem mit offenem oder geschlossenem Regelkreis arbeitenden Meß-System, dadurch gekennzeichnet, daß der Zähler (15) vom Bidirektionaltyp ist, wobei die Regeleinrichtung Polaritätsdiskriminierungsmittel des Fehlersignales aufweist, welches die Winkelabweichung zwischen einer effektiven, von außen aufgezwungenen Stellung des Rotors und einer Sollwertstellung darstellt, wobei die genannten Mittel (32) die Zu- oder Abnahme des Inhaltes des Zählers (15) steuern, um das Fehlersignal zu annulieren, so daß der Inhalt des Zählers der Winkelabweichung entspricht.

**Claims**

1. Control means of at least one direct current motor (2), comprising a transducer (6) delivering signals representative of the angle of rotation of the rotor of said motor, said signals measuring the effective angular position ($\alpha$) of said rotor, a generator of nominal value signals (15—19) delivering signals defining a nominal value of an angular position ($\beta$) of said rotor, said effective position signals (Xr, Yr) and said nominal value position signals (Xc, Yc) being formed each of two signals mutually phase-shifted by a determined angle, each of said phase-shifted signals being a sinusoidal function of the angle ($\alpha$) of the effective position, respectively of the angle ($\beta$) of nominal value position of said rotor and means (11) delivering from said signals of effective position and of nominal value position an error signal (d) representative of the angular difference ($\varepsilon$) between the effective position and the nominal value position of the rotor, said control means controlling a displacement of said rotor such as to cancel out said error signal, characterized in that said generator of nominal value signals comprises addressing means (15) generating address signals for two storage units (16, 17) of nominal value which deliver said nominal value signals (Xc, Yc) in response to said address signals, said error signal delivering means (11) receiving said mutually phase-shifted signals and delivering said error signal (d) which is depending on said angular difference ($\varepsilon$).

2. Control means according to claim 1, characterized in that said error signal delivering means are a computing device (11) determining said error signal in accordance with the relation:

$$d = (Yc - Yr) \times (Xc + Xr)/2 - (Xc - Xr) \times (Yc + Yr)/2 = \sin \varepsilon \tag{1}$$

with:

Xc = cos $\beta$, Yc = sin $\beta$, $\beta$ = nominal value angle
Xr = cos $\alpha$, Yr = sin $\alpha$, $\alpha$ = angle of effective position
$\varepsilon = \alpha - \beta$ = angular difference.

3. Control means according to claim 1 or 2, characterized in that said addressing means are a counter (15) receiving a clock signal.

4. Control means according to claim 2, characterized in that said computing device (11) receives as input values said effective position signals (Xr, Yr) and nominal value position signals (Xc, Yc) and in that it computes said error signal (d) by way of a digital or analog processing known in itself.

5. Control means according to claim 3, comprising digital-to-analog converter means (18, 19) of said nominal value signals and a circuit (20) adapting the amplitude of said nominal value signals (Xc, Yc) at the output of said converter means to said effective position signals (Xr, Yr) for compensating random fluctuations of the amplitude of said position signals.

6. Control means according to claim 3, characterized in that said clock signal is delivered by a clock signal generator (13) the frequency of which is controlled by a microprocessor (12).

7. Control means according to claim 6 for controlling two motors in a determined speed ratio, characterized in that it comprises two position error circuits comprising each a nominal value signals generator (15—19) and a computing device (11) delivering said position error signal (d), said circuits receiving from said clock signal generator (13) signals the frequencies of which are in a determined relationship, identical to said speed ratio and in that it comprises a correcting circuit (21) connected to said clock signal generator (13) and to one of the circuits of position error and controlled by said microprocessor (12) for adding or inhibiting clock pulses at the input of said circuit of position error for correcting differences of said speed ratio with respect to the theoretical value.

8. Control means according to claim 1, characterized in that the values for the correction of said differences of said speed ratio are stored in a storage unit of the microprocessor (12).

9. Control means according to claim 1, characterized in that said transducer (6) is of the rotative or linear incremental type or either of the interference band type.

10. Utilization of the control means according to claim 3 as an interpolator of a measuring system operating either in an open or a closed loop, characterized in that said counter (15) is bidirectional, said

7

control means comprising discriminating means (32) of the polarity of said error signal (d) representative of the angular difference between an effective position of the rotor imposed by the outside and a nominal value position, said discriminating means (32) controlling the increase or the decrease of the content of said counter so that said content is representative of said angular difference.

0 105 033

## FIG.1

1/4 PAS

1 PAS

## FIG.2

SINUS — angle de rotation

1/4PAS | 90°

COSINUS — angle de rotation

1 PAS

360° electriques

9

0 105 033

FIG.3a

FIG.3b

FIG.5

FIG.6

11

# FIG.4a

Tension

SIN — 1 ··· 5 ··· Angle

COS — 2 ··· 6

-SIN — 3 ··· 7

- COS — 4

# FIG.4b

Tension d'erreur [V]

Temps

1→2 ··· 2→3 ··· 3→4

FIG.7

FIG.8

FIG.9

FIG.10

# FIG.11

$y_c$

$x_c$

$y_r$

$x_r$

R

R
R

25  $-(y_c-y_r)$

26

R/2

22

R
R

$-\dfrac{(x_c+x_r)}{2}$

R  R

R

27  $-(y_c+y_r)$

R

23  $-y_r$

R

28

R

R

R

24  $-x_r$  R

R

R

29  $-(x_c-x_r)$

$\dfrac{(y_c+y_r)}{2}$

30

11

$\dfrac{(y_c-y_r)\times(x_c+x_r)}{2}$

R

31  d

$-\dfrac{(x_c-x_r)\times(y_c+y_r)}{2}$

# FIG.12

33

N

U

15

D

d

32

a  S  b

c

13